# EUROPEAN PATENT SPECIFICATION

(11) **EP 3 990 178 B1**
(45) Date of publication and mention of the grant of the patent: **21.05.2025**
(21) Application number: 19742527.5
(22) Date of filing: 26.06.2019
(51) Int. Cl.: B01L 3/00, G01N 35/10

(54) **CARTRIDGE, ELECTROWETTING SAMPLE PROCESSING SYSTEM AND FEEDING THEREOF**
KARTUSCHE, SYSTEM ZUR ELEKTROBENETZUNGS-PROBENVERARBEITUNG UND ZUFÜHRUNG DAFÜR
CARTOUCHE, SYSTÈME DE TRAITEMENT D'ÉCHANTILLON PAR ÉLECTROMOUILLAGE ET SON ALIMENTATION

(43) Date of publication of application: 04.05.2022
(73) Proprietor: TECAN Trading AG, 8708 Männedorf (CH)
(72) Inventor: KINNEY, Patrick, Hayward, California 94542 (US); IYER, Sujata, San Jose, California 95131 (US); HOFFMEYER, Daniel, San Jose, California 94134 (US); DHINDSA, Manjeet, San Jose, California 95117 (US); NGO, Tin, San Jose, California 95120 (US); DING (LAY), Tiffany, San Jose, California 95132 (US); BJÖRNSON, Torleif Ove, Gilroy, California 95020 (US)
(74) Representative: Troesch Scheidegger Werner AG
(86) International application number: PCT/EP2019/066935
(87) International publication number: WO 2020/259816

(56) References cited:
- US-A1- 2004 101 444
- US-A1- 2008 085 219
- US-A1- 2010 062 508
- US-A1- 2015 144 489
- PAWEL DEBSKI ET AL: "Continuous Recirculation of Microdroplets in a Closed Loop Tailored for Screening of Bacteria Cultures", MICROMACHINES, vol. 9, no. 9, 17 September 2018 (2018-09-17), pages 469, XP055670288, DOI: 10.3390/mi9090469

## Description

### TECHNICAL FIELD OF THE INVENTION

The current invention relates to a cartridge, in particular a disposable cartridge for use in an electrowetting sample processing system, an electrowetting sample processing system, and a method for operating such a cartridge or system.

### DESCRIPTION OF THE RELATED ART

The document WO 2014/108186 A1 describes a cartridge with a waste zone, such that the cartridge together with the waste is discarded after process completion. US 2010/062508 A1 shows a droplet actuator with discrete and continuous flow sections separated by a barrier and US 2015/144489 A1 concerns a self-containing disposable cartridge.

### SUMMARY OF THE INVENTION

It is a task of the current invention to provide a cartridge that allows for a precise and versatile processing of microfluidic droplets.

This task is solved by a cartridge with the features of claim 1. Further embodiments of the cartridge, an electrowetting sample processing system with such a cartridge, as well as a method for operating such a cartridge or system are defined by the features of further claims.

A cartridge according to the invention, namely a cartridge for use in an electrowetting sample processing system, comprises one or more inlet ports for introducing an input liquid into an internal gap of the cartridge. The gap comprises at least one hydrophobic surface for enabling an electrowetting induced movement of multiple microfluidic droplets separated from the input liquid. The cartridge further comprises at least one outlet port that is operably connected to the inlet port for providing a liquid flow through the cartridge, if a liquid driving force, in particular an electrowetting force or a pressure force, is applied to at least a part of the input liquid. The cartridge comprises a first part with the inlet port and a second part attached to the first part, such that the gap is formed between the first part and the second part, the second part comprising an electrode support element or a flexible film.

The cartridge comprises a first part with the inlet port and a second part attached to the first part, such that the gap is formed between the first part and the second part.

The second part comprises an electrode support element or a flexible film.

In a further embodiment, the first part comprises a rigid body and/or the second part comprises or is a polymer film. In particular, the second part is attached to a peripheral side structure of the first part.

In a further embodiment, the gap is defined by a spacer that is arranged between the first part and the second part and/or by the shape of at least one of the two parts of the cartridge, in particular by a flexible part or a rigid part of the cartridge.

In a further embodiment, one or more of the following comprise an outlet port: the first part, the second part, the spacer, the peripheral side structure of the first part.

In a further embodiment, the cartridge is configured to provide the flow through the cartridge as a continuous flow and/or to substantially maintain a volume equilibrium in the cartridge. The continuous flow may include periods of unbalanced pressure, for example an under-pressure or an over-pressure, which may result from differences of flow between the input flow and the output flow, i.e. differences in the pumping characteristic. In one example, the maximum length of the period of unbalanced pressure is 1 second, in particular 0.25 seconds.

In a further embodiment, the cartridge comprises a plurality of electrodes, in particular an electrode array, for applying an electrowetting force to the microfluidic droplets.

In an embodiment, the second part of the cartridge, in particular the electrode support element or the flexible film or the membrane, is reversibly attachable to the electrodes of the electrowetting sample processing system.

In a further embodiment, at least two of the electrodes are connected to an electrical interface, in particular to an electrical connector or contact field.

In a further embodiment, the cartridge comprises the inlet port as a single inlet port.

In a further embodiment, the cartridge is configured as a disposable cartridge and/or as cartridge that is removably attachable to an electrowetting sample processing system.

In a further embodiment, the input liquid comprises a carrier liquid and/or an electrowetting filler liquid, further in particular a silicone oil.

In a further embodiment, the input liquid comprises a processing liquid that comprises at least one of:
- a reagent,
- a buffer,
- a diluent,
- an extraction liquid,
- a washing liquid, and
- a suspension, which further in particular is a suspension of magnetic beads, single cells or cell aggregates.

In a further embodiment, the cartridge comprises at least one liquid removal element, in particular a line removal and/or a removal zone, that is operably connected to the outlet port.

In a further embodiment, the cartridge comprises a pressure compensation outlet and/or an air ventilation outlet for providing a fluid output arranged separate from the outlet port, in particular gas exhaust.

The features of the above-mentioned embodiments of the cartridge can be used in any combination, unless they contradict each other.

An electrowetting sample processing system according to the present invention, in particular a biological sample processing system, comprises a cartridge according to anyone of the above-mentioned embodiments.

An electrowetting sample processing system according to the invention comprises a cartridge (2) with an internal gap and one or more inlet ports for introducing an input liquid into the internal gap. The gap comprises at least one hydrophobic surface for enabling an electrowetting induced movement of multiple microfluidic droplets separated from the input liquid. The internal gap further comprises at least one outlet port that is in operable connection with the inlet port for providing a liquid flow through the internal gap, if a liquid driving force, in particular an electrowetting force or a pressure force, is applied to at least a part of the input liquid. The cartridge comprises a first part with the inlet port and a second part attached to the first part, such that the gap is formed between the first part and the second part.

In an embodiment, the electrowetting sample processing system comprises a plurality of electrodes for applying an electrowetting force to the microfluidic droplets, in particular an electrode array, further in particular a two-dimensional electrode array.

In an embodiment, at least two of the electrodes are connected to an electrical interface, in particular to an electrical connector or contact field.

In an embodiment, the electrowetting sample processing system comprises a cartridge, which is reversibly attachable to the electrodes of the electrowetting sample processing system, wherein in particular the cartridge comprises a electrode support element or a flexible second part, further in particular a flexible film or the membrane.

In an embodiment, the electrowetting sample processing system or the cartridge comprises a processing zone, which is configured for processing samples, in particular for processing biological sample, and/or which is operably connected to the delivery zone.

In an embodiment, the processing zone is configured for processing least one of:
- a chemical reaction,
- a washing process,
- a heating process,
- a mixing process,
- a dilution, and
- a hybridization.

In an embodiment, the processing zone is configured for processing a PCR (Polymerase chain reaction) process and/or a hybridization.

In an embodiment, the electrowetting sample processing system comprises a liquid feeder operably connected to the inlet port by a tube, in particular a flexible tube, for feeding the input liquid to the inlet port.

In an embodiment, the liquid feeder is configured to provide the input liquid as sequential feed and/or alternating feed of a processing liquid and a carrier liquid.

In an embodiment, the liquid feeder is configured to provide the input liquid as feed of at least two processing liquids of different compositions separated by an carrier liquid.

In an embodiment, the liquid feeder comprises a T-shaped junction and/or a multi-port valve for providing the input liquid.

In an embodiment, the liquid feeder comprises a bypass that is controllable for flushing a tube of the feeder and/or for removing an access liquid from a feeding liquid and to providing the remaining part of the feeding liquid as the input liquid.

In an embodiment, the liquid feeder comprises a control element, in particular a pump and/or a multi-port valve, for introducing the input liquid into the internal gap and/or for removing an output liquid from the internal gap.

In an embodiment, the liquid feeder is configured to operate independently and/or asynchronously from the operation of electrodes used for electrowetting.

In an embodiment, the input liquid comprises at least one of:
- an electrowetting filler liquid, in particular a silicone oil,
- a carrier liquid, and
- a processing liquid, that in particular comprises at least one of:
   - a reagent,
   - a buffer,
   - a diluent,
   - an extraction liquid,
   - a washing liquid, and
   - a suspension, which further in particular is a suspension of magnetic beads, single cells or cell aggregates.

In an embodiment, the electrowetting sample processing system comprises a reagent detector for indicating the presence of processing liquid in the input liquid and/or for monitoring the amount of processing liquid in the input liquid, in particular in relation to a predetermined value.

The features of the above-mentioned embodiments of the electrowetting sample processing system can be used in any combination, unless they contradict each other.

The invention further concerns a method for operating the cartridge according to the invention or the sample processing system according to the invention.

The invention further concerns a method for operating a cartridge according to the invention or a sample processing system according to the invention that comprises an internal gap, which comprises one or more inlet ports, an outlet port and at least one hydrophobic surface enabling an electrowetting induced movement of microfluidic droplets separated from the input liquid. The method comprises:
- introducing an input liquid into an internal gap;
- providing a flow through the internal gap as a substantially continuous flow;
- transferring the liquid from the inlet port to the outlet port via the internal gap by applying a liquid driving force, in particular an electrowetting force or a pressure force, to at least a part of the input liquid; and
- removing the liquid from the internal gap (6) via the outlet port.

In an embodiment, the driving force is provided by a plurality of electrodes, in particular by an electrode array, further in particular by a two-dimensional electrode array.

In an embodiment, the step of providing the flow through the internal gap as a substantially continuous flow and/or maintaining a volume equilibrium.

In an embodiment, the method comprises inducing a movement of multiple microfluidic droplets by operating a plurality of electrodes, in particular an electrode array (9), for applying the electrowetting force to the microfluidic droplets.

In an embodiment, the input liquid comprises a carrier liquid and/or an electrowetting filler liquid, in particular a silicone oil. In a further embodiment, the input liquid comprises a processing liquid that comprises at least one of:
- a reagent,
- a buffer,
- a diluent,
- an extraction liquid,
- a washing liquid, and
- a suspension, which further in particular is a suspension of magnetic beads, single cells or cell aggregates.

The features of the above-mentioned embodiments of the method can be used in any combination, unless they contradict each other.

### BRIEF DESCRIPTION OF THE DRAWINGS

Embodiments of the current invention are described in more detail in the following with reference to the figures. These are for illustrative purposes only and are not to be construed as limiting. It shows
Fig. 1 an overview over an exemplary digital microfluidics system that is equipped with a central control unit and a base unit, with four cartridge accommodation sites and with four board accommodation sites for receiving an electrode board that each comprises an electrode array;
Fig. 2 a section view of one cartridge accommodation site with a disposable cartridge according to Fig. 1; the electrode array being located on a fixed bottom substrate;
Fig. 3 a section view of a further exemplary cartridge accommodation site according to Fig. 2, wherein the electrode array is a part of the cartridge;
Fig. 4 a section view of an exemplary cartridge accommodation site with a disposable cartridge according to a further embodiment accommodated therein; the cartridge comprising a flexible bottom layer;
Fig. 5 a section view of an exemplary cartridge accommodation site with a disposable cartridge according to a further embodiment accommodated therein; also this cartridge comprising a flexible bottom layer;
Fig. 6 a schematic view of an exemplary embodiment of an inlet port according to the invention;
Fig. 7 a schematic overview over an exemplary embodiment of an electrowetting sample processing system with a cartridge, an inlet port and operably connected outlet ports;
Fig. 8 a schematic overview over a further exemplary embodiment of an electrowetting sample processing system;
Fig. 9 exemplarily in a schematic view how at a T-shaped junction a droplet of a processing liquid is formed;
Fig. 10 a schematic view of a T-shaped junction, with which a high precision of a desired droplet volume may be achieved;
Fig. 11 schematic views of multi-port valves for providing a predetermined volume of liquid droplets; and
Fig. 12 a schematic view of an exemplary electrowetting sample processing system comprising a multi-port valve and a T-shaped junction for droplet generation.

### DETAILED DESCRIPTION OF THE INVENTION

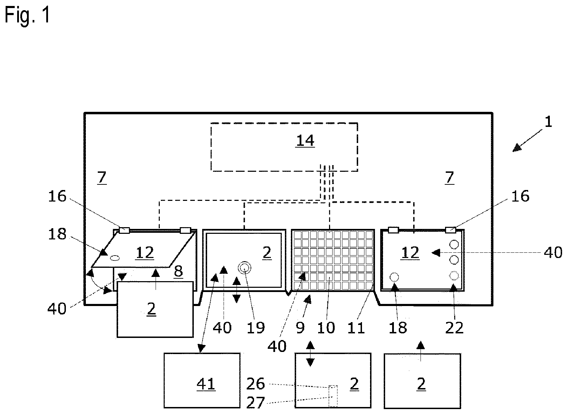

The Figure 1 shows an overview over an electrowetting sample processing system exemplary shown as digital microfluidics system 1 that is equipped with a central control unit 14 and a base unit 7, with four cartridge accommodation sites 8 that each comprise an electrode array 9, and a cover plate 12. The digital microfluidics system 1 is configured for manipulating samples in liquid droplets 23 within cartridges designed as disposable cartridges 2. This digital microfluidics system 1 also comprises four board accommodation sites 40 for receiving an electrode board 41.

The digital microfluidics system 1 comprises a base unit 7 with at least one cartridge accommodation site 8 that is configured for taking up a disposable cartridge 2. The digital microfluidics system 1 can be a standalone and immobile unit, on which a number of operators are working with cartridges 2 that they bring along. The digital microfluidics system 1 thus may comprise a number of cartridge accommodation sites 8 and a number of electrode arrays 9 at least some of which are located on electrode boards 41.

It may be preferred to integrate the digital microfluidics system 1 into a liquid handling workstation or into a Freedom EVO^{®} robotic workstation, so that a pipetting robot can be utilized to transfer liquid portions and/or sample containing liquids to and from the cartridges 2.

Alternatively, the system 1 can be can be configured as a hand-held unit which only comprises and is able to work with a low number, e.g. a single disposable cartridge 2. Every person of skill will understand that intermediate solutions that are situated in-between the two extremes just mentioned will also operate and work within the gist of the present invention.

According to the present invention, the digital microfluidics system 1 also comprises at least one board accommodation site 40 for taking up an electrode board 41 which comprises an electrode array 9 that substantially extends in a first plane and that comprises a number of electrodes 10. Such an electrode board 41 preferably is located at each one of said cartridge accommodation sites 8 of the base unit 7. Preferably each electrode array 9 is supported by a bottom substrate 11. It is noted that the expressions "electrode array", "electrode layout", and "printed circuit board (PCB)" are utilized herein as synonyms.

The digital microfluidics system 1 may also comprise at least one cover plate 12 with a top substrate; though providing of such cover plates 12 is particularly preferred, at least some of the cover plates may be dispensed with or may be re-placed by an alternative cover for holding a disposable cartridge 2 in place inside the base unit of the microfluidics system 1. Thus, at least one cover plate 12 may be located at one of said cartridge accommodation site 8. The cover plate 12 and the bottom substrate 11 with the electrode array 9 or PCB define a space or cartridge accommodation site 8 respectively. In a first variant (see the two cartridge accommodation sites 8 in the middle of the base unit 7, the cartridge accommodation sites 8 are configured for receiving a slidingly inserted disposable cartridge 2 that is movable in a direction substantially parallel with respect to the electrode array 9 of the respective cartridge accommodating site 8. Such front- or top-loading can be supported by a drawing-in automatism that, following a partial insertion of a disposable cartridge 2, transports the cartridge 2 to its final destination within the cartridge accommodation site 8, where the cartridge 2 is precisely seated. Preferably, these cartridge accommodation sites 8 do not comprise a movable cover plate 12. After carrying out all intended manipulations to the samples in liquid droplets, the used cartridges 2 can be ejected by the drawingin automatism and transported to an analysis station or discarded.

In a second variant (see the two cartridge accommodation sites 8 on the right and left of the base unit 7), the cartridge accommodation sites 8 comprise a cover plate 12 that is configured to be movable with respect to the electrode array 9 of the respective cartridge accommodating site 8. The cover plate 12 preferably is configured to be movable about one or more hinges 16 and/or in a direction that is substantially normal to the electrode array 9.

Similar to the possibilities for inserting a disposable cartridge 2 into a cartridge accommodation site 8, possibilities for inserting the electrode board 41 into a board accommodation site 40 comprise the following alternatives:
(a) vertically lowering the electrode board 41 through the respective cartridge accommodation site 8 and into the board accommodation site 40;
(b) horizontally sliding the electrode board 41 below the respective cartridge accommodation site 8 and into the board accommodation site 40;
(c) horizontally sliding the electrode board 41 below the respective cartridge accommodation site 8 and substantially vertically lifting into the board accommodation site 40.

In Fig. 1, there is drawn only one electrode board 41 that slidingly can be inserted by front loading below the second cartridge accommodation site 8 (as counted from the left). All possible places for locating a board accommodation site 40 are indicated and pointed to by dashed arrows.

The digital microfluidics system 1 also comprises a central control unit 14 for controlling the selection of the individual electrodes 10 of said at least one electrode array 9 and for providing these electrodes 10 with individual voltage pulses for manipulating liquid droplets within said cartridges 2 by electrowetting. As partly indicated in Fig. 1, every electrode 10 is operatively connected to the central control unit 14 and therefore can be independently or commonly addressed by this central control unit 14, which also comprises the appropriate sources for creating and providing the necessary electrical potentials in a way known in the art.

The at least one cover plate 12 preferably comprises an electrically conductive material that extends in a second plane and substantially parallel to the electrode array 9 of the cartridge accommodation site 8 the at least one cover plate 12 is assigned to. It is particularly preferred that this electrically conductive material of the cover plate 12 is configured to be not connected to a source of an electrical ground potential. The cover plate 12 can be configured to be movable in any arbitrary direction and no electrical contacts have to be taken in into consideration when selecting a particularly preferred movement of the cover plate 12. Thus, the cover plate 12 may be configured to be also movable in a direction substantially parallel to the electrode array 9 and for carrying out a linear, circular or any arbitrary movement with respect to the respective electrode array 9 of the base unit 7.

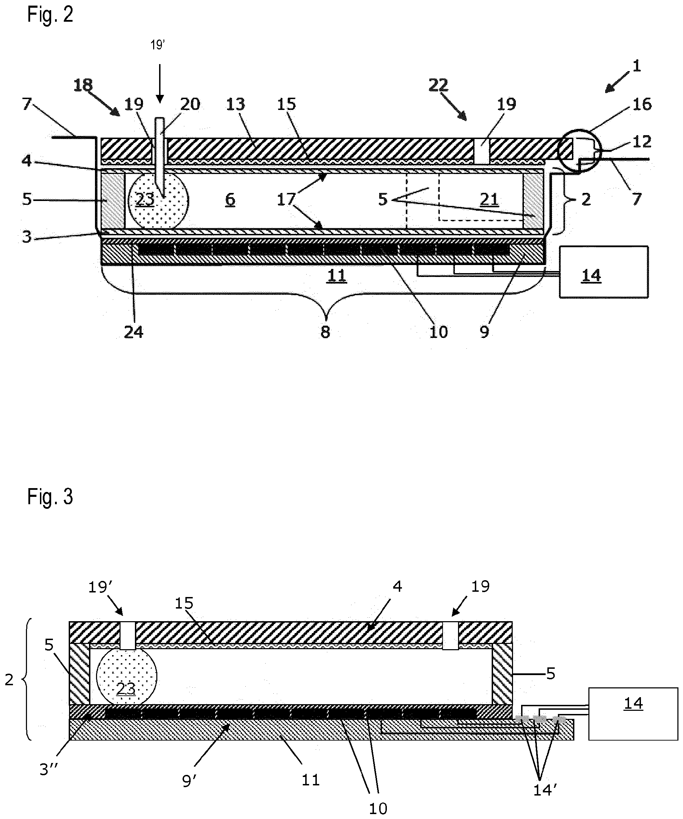

The Figure 2 shows a section view of one exemplary cartridge accommodation site 8 with the disposable cartridge 2 according to Fig. 1 accommodated therein. The disposable cartridge 2 comprises a bottom layer 3 as a second part of the cartridge 2, a top layer 4 as a first part of the cartridge 2, and a spacer 5 that defines a gap between the bottom and top layers 3,4 for manipulating samples in liquid droplets 23 in this gap 6.

The cover plate 12 is mechanically connected with the base unit 7 of the digital microfluidics system 1 via a hinge 16; thus, the cover plate 12 can swing open and a disposable cartridge 2 can be placed on the cartridge accommodation site 8 via top-entry loading (see Fig. 1). An electrically conductive material 15 of the cover plate 12 is configured as a thin metal plate or metal foil that is attached to the top substrate 13. Alternatively, the electrically conductive material 15 of the cover plate 12 is configured as a metal layer that is deposited onto the top substrate 13. Such deposition of the conductive material 15 may be carried out by chemical or physical vapor deposition techniques as they are known per se.

The cover plate 12 is configured to apply a force to a disposable cartridge 2 that is accommodated at the cartridge accommodation site 8 of the base unit 7. This force urges the disposable cartridge 2 against the electrode array 9 in order to position the bottom layer 3 of the cartridge as close as possible to the surface of the electrode array 9. This force also urges the disposable cartridge 2 into the perfect position on the electrode array 9 with respect to an optional piercing facility 18 of the cover plate 12. This piercing facility 18 is configured for introducing sample droplets into the gap 6 of the cartridge 2. The piercing facility 18 is configured as a through hole 19 that leads across the entire cover plate 12 and that enables a piercing pipette tip 20 to be pushed through and pierce the top layer 4 of the cartridge 2. The piercing pipette tip 20 may be a part of a handheld pipette (not shown) or of a pipetting robot (not shown).

In the case shown in Fig. 2, the electrode array 9 is covered by a dielectric layer 24. The electrode array 9 is fixed to a bottom substrate 11, this combination is also called PCB, and every individual electrode 10 is electrically and operationally connected with the central control unit 14 (only three connections of the ten electrodes 10 are drawn here). Alternatively, the electrodes may be commonly connected to an electrical interface, in particular to an electrical connector or an electrical contact field - which in turn is then electrically connected to a control unit 14. In one example, the bottom substrate 11 or the PCB that contains the electrode array 9 or the electrodes 10 has an electrical connector, which connects to a relay PCB, which is connected to a control PCB, wherein the control PCB is part of the central control unit 14.

The electrode array 9 is located on an immovably fixed bottom substrate 11. The digital microfluidics system 1 is configured for manipulating samples in liquid droplets 23 within disposable cartridges 2 that contain a gap 6. Accordingly, the samples in liquid droplets 23 are manipulated in the gap 6 of the disposable cartridge 2. The disposable cartridge 2 comprises the bottom layer 3, the top layer 4, and the spacer 5 that defines the gap 6 between the bottom and top layers 3,4 for manipulating samples in liquid droplets 23 in this gap 6. The bottom layer 3 and the top layer 4 comprise a hydrophobic surface 17 that is exposed to the gap 6 of the cartridge 2. The bottom layer 3 and the top layer 4 of the cartridge 2 are entirely hydrophobic films or at least comprise a hydrophobic surface that is exposed to the gap 6 of the cartridge 2. It is clear from this Fig. 2, that the cartridge 2 does not have a conductive layer. The spacer 5 of the cartridge 2 may optionally be configured as a body that includes compartments 21 for reagents needed in an assay that is applied to the sample droplets in the gap 6 (dotted lines).

Figure 3 shows a section view of a further exemplary cartridge accommodation site according to figure 2 with a cartridge 2, wherein - in contrast to figure 2 - the cartridge 2 comprises an electrode array 9' of individual electrodes 10.

Further the cartridge 2 comprises an upper part 4, a spacer 5, a hydrophobic layer 3'', a support element 11' for the electrode array 9', an optional through hole 19, a liquid input port 19' and electrically conductive material. The upper part 4 and the spacer 5 may be provided as separate parts or in form of a single piece. The hydrophobic layer 3'', the electrode array 9' and the support element 11' form the lower part of the cartridge. The electrode array 9' is arranged between the hydrophobic layer 3'' and the support element 11' and the gap is formed between the upper part 4 and the hydrophobic layer 3''. Further, the hydrophobic layer 3'' is attached to a peripheral side structure of the upper part 4 resp. to the spacer 5. The support element 11' further comprises electrical connectors 14', which are connected via multiple electrical wires to the electrode array 9'. In turn, the electrical connectors 14' provide for a connection to a central control unit 14 such that the electrical connectors 14' implement an electrical interface between cartridge 2 and the digital microfluidics system 1. The electrical interface can also be implemented by a contact field, i.e. a plurality of electrically conductive, mutually insulated contact areas.

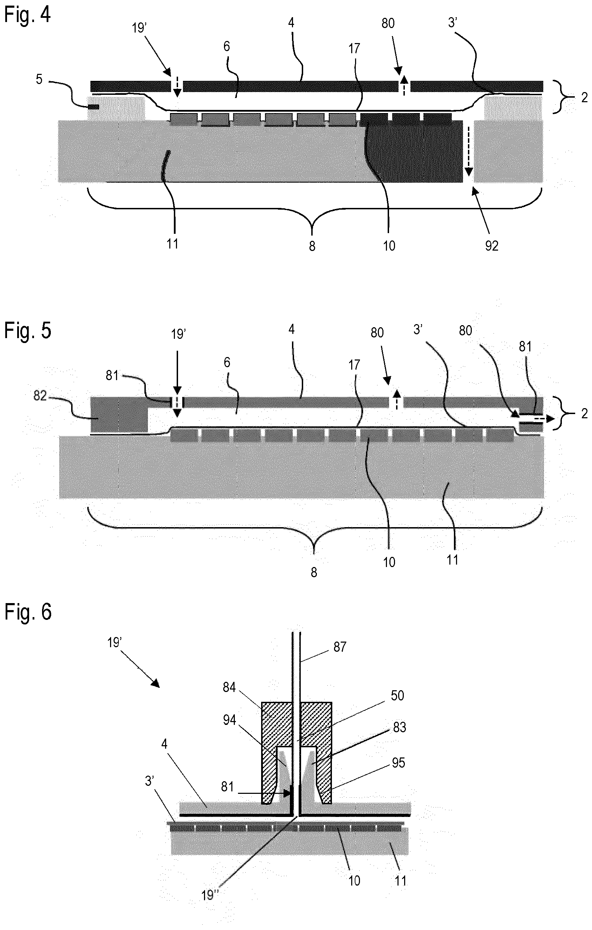

Figure 4 shows section view of one cartridge accommodation site 8 with a disposable cartridge 2 according to a further embodiment accommodated therein. Again, the electrodes 10 are arranged on and fixed to the bottom substrate 11. Again, the disposable cartridge 2 comprises a bottom layer 3' and a top layer 4. Attached to the disposable cartridge 2 is a spacer 5 that defines a gap 6 between the bottom and top layer 3, 4 for manipulating samples in liquid droplets 23 in this gap 6. In this embodiment, the bottom layer is a flexible bottom layer, for example a membrane 3', for example with a hydrophobic surface 17. For example, the membrane 3' is an 8 to 50 µm thick polypropylene film. The bottom layer 3' is arranged between the top layer 4 and the spacer 5.

Preferably, the flexible bottom layer 3 is reversibly attached to the electrodes 10 in an electrowetting sample processing system 1. The spacer 5 may be a part of the cartridge 2 or a part of the electrowetting sample processing system 1. In one example, the spacer 5 comprises stainless steel, aluminum, hard plastic, in particular COP or ceramic. The spacer 5 may be designed to define the height of the gap 6. The spacer 5 may additionally serve as a gasket for sealing the gap 6.

Preferred dimensions and materials are pointed to in table 1. These indications of materials and dimensions serve as preferred examples without limiting the scope of the present invention.

**Table 1**

| Part | No | Material | Dimensions and Shape |
|---|---|---|---|
| Droplet | 23 | aqueous | Volume: 0.1-5 µl |
| Substrate | 11 | PCB; Synth. Polymer | --- |
| Electrodes | 10 | Al; Cu; Au; Pt | Plating: 1.5 x 1.5 mm |
| Film | 3 | Fluorinated ethylene propylene (FEP), Cyclo olefin polymer (COP), Polypropylene (PP) | Thickness: 8-50 µm |
| Hydrophobic surface | 17 | Teflon^{®} (PTFE), COP, FEP, PP, Cytop | Thickness: 8-50 µm |
| | | | Coating: 2-200 nm |
| | | | Spin coating: 5-500 nm, preferably 20 nm |
| Rigid cover | 4 | Mylar^{®}; acrylic; Polypropylene (PP) | 65 x 85 mm; |
| | | | Plate: 0.5-25.0 mm, preferably 1.5 mm |
| Gap | 6 | --- | 0.2-2.0 mm, preferably 0.5 mm |
| Pipetting orifice | 19 | --- | Diameter: 0.3-3.0 mm |
| Spacer, Gasket | 5 | Polypropylene (PP), Synthetic or natural rubber | Frame: 0.2-2.0 mm, preferably 0.5 mm |
| Electrowetting filler liquid | | Silicon oil | Volume: 1-5 ml |
| Carrier liquid for separating parts of processing liquid | 60 | e.g. Silicon oil | Volume: 1-100 µl |
| Processing liquid | 61 | Diverse, e.g. reagent liquid | Volume: 1-100 µl |

An inlet port 19' for introducing a liquid 60,61 into the gap 6 is provided in the top layer 4 of the cartridge 2. In addition, an outlet port 80 is provided for removing liquid from the gap 6 of the cartridge 2. The outlet port 80 is arranged in this case also in the top layer 4 of the cartridge 2. Preferably, the top layer 4 comprises a rigid body when the inlet port 19' and/or an outlet port 80 are arranged within the top layer 4, to provide a certain stability to the ports 19',80. Stability is desired to ensure a sufficiently tight connection of tubes 87 of an outer liquid circuit to the ports, so that the liquid does not leak at the connection between the port(s) 19',80 of the cartridge 2 and the tubes 87.

Preferably, the inlet port 19' and the outlet port 80 are operably connected. By this, a liquid flow is provided through the cartridge 2 if a liquid driving force is applied to at least a part of the input liquid 105. A liquid driving force may be a pressure force applied to at least a part of the input liquid 105 and/or an electrowetting force for example applied to at least a part of the input liquid 105 when it has been moved into the gap 6 of the cartridge 2.

In addition, a vacuum supply line 92 is exemplarily shown in Figure 3. By means of a vacuum supply line 92, the bottom layer 3' may be attached tightly to the surface of the electrodes 10.

Figure 5 shows a section view of an exemplary cartridge accommodation site with a disposable cartridge according to a further embodiment accommodated therein. Also, this cartridge 2 comprises a flexible bottom layer 3' which is arranged on the electrodes 10. In this embodiment, the top layer 4 comprises peripheral side structures 82 which define the gap 6. For defining the gap 6, the peripheral side structures 82 are preferably rigid structures. The bottom layer 3' is attached to the peripheral side structures 82. Thus, in this embodiment shown, the gap 6 is defined by the shape and dimensions of the top layer 4. It is possible to combine the use of spacer 5 with the shape of the top layer 4 or with a shape of the bottom layer 3 for defining the gap 6.

An inlet port 19' is provided again in the top layer 4 of the cartridge 2. By means of the inlet port 19', an input liquid 60,61 can be introduced into the cartridge 2. An inlet port 19' may also be arranged in the side structures of the cartridge 2, for example in a spacer 5 or in peripheral side structures 82 of the top layer 4, depending on the chosen structure of the cartridge 2. In one example, the inlet port 19' is located on the bottom layer and enters the spacer 5 and - after a 90 degree turn - enters into the side of the cartridge 2. In another example the gap spacer that enables the liquid connection is located in the middle or a center part of the cartridge 2.

In the embodiment of Figure 5, two outlet ports 80 are provided in the cartridge 2: one outlet port 80 is arranged in the top layer 4, and one outlet port 80 is arranged in a peripheral side structure 82 of the top layer 4. A certain degree of rigidity of the top layer 4 and its side structure 82 ensures a dimensionally stable gap 6 and also dimensionally stable ports 19',80.

The number of outlet ports 80 provided by a cartridge 2 may depend on the application for which the cartridge 2 is designed. According to the invention, at least one inlet port 19' and at least one outlet port 80 are provided, to enable a liquid flow throughout the cartridge 2. In another example multiple inlet ports 19' are used, which in particular provide input for different reagents or different classes of reagents, for example at least one bulk reagent via a first inlet port and at least one stoichiometric reagent via a second inlet port. In another example, the multiple inlet ports 19' are individually connected to a control element, in particular to a multi-port valve 90 and/or to a pump, to an individual input syringe pump 99 and/or an individual T-shaped junction 88.

In Figure 5, the inlet port 19' and one of the outlet ports 80 comprise a seal 81. Such a seal may help to achieve a tight connection between the cartridge 2 and an "outer" liquid circuit or tubing system.

Figure 6 shows a schematic view of an exemplary embodiment of an inlet port 19'. A first connecting sleeve 83 is arranged at the top of the top layer 4. The first connecting sleeve 83 is formed integrally with the top layer 4. The first connecting sleeve 83 comprises a centering cone 94 at its inside, wherein the centering cone 94 faces away from the top layer 4 and widens with an increased distance to the top layer 4. A supply channel 50 is formed by a tube 87 and a second connecting sleeve 84 with a centering cone 95 at its inside. During the assembly, the tube 87 is centered by the centering cone 94 of the first connecting sleeve 83. When completely inserted, the tube 87 forms a tight connection with the first connecting sleeve 83 and the seal 81 provided by the centering sleeve 83. The centering cone 95 of the second connecting sleeve 84 faces the top layer 4 and widens with a reduced distance to the top layer 4. The inside of the second connecting sleeve 84 is bigger than the outside of the first connecting sleeve 83. During the assembly, the second connecting sleeve 84 is centered by the outside of the first connecting sleeve 83. The free inner space in the inlet port 19' forms the inlet channel 19".

Alternatively, an inlet port 19' and/or an outlet port 80 may be a simple passage opening into which a tube of an outer liquid circuit may be mounted. Preferably, the passage opening comprises a seal 81 for a tight connection.

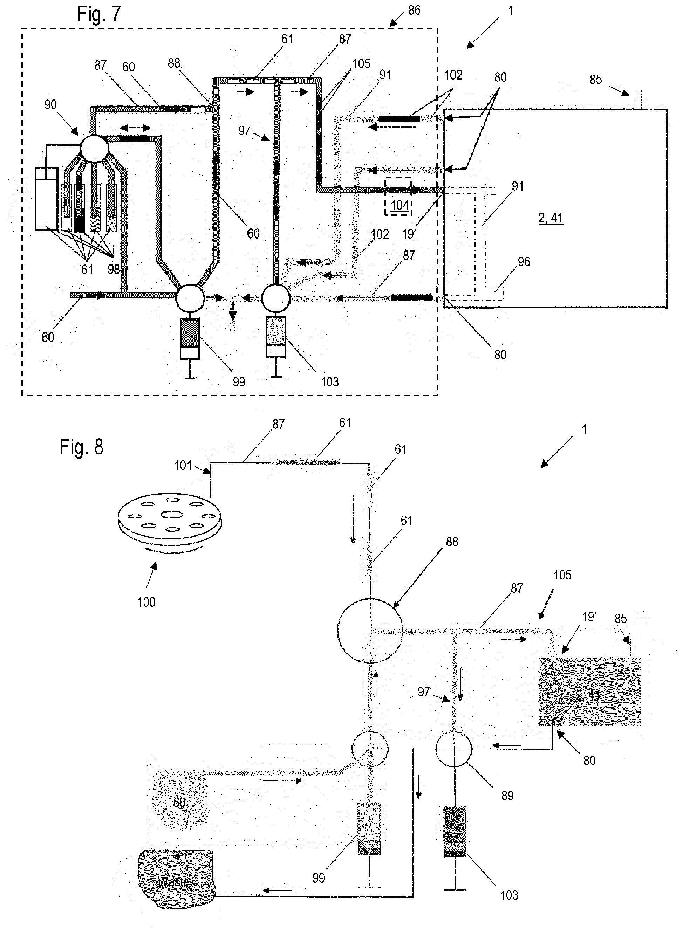

Figure 7 shows a schematic overview over an exemplary embodiment of an electrowetting sample processing system 1 with a cartridge 2, an inlet port 19' and operably connected outlet ports. This particular embodiment comprises three distinct outlet ports 80, with which liquid 60,61, may be removed from the cartridge 2.

By the operational connection of the inlet port 19' and the outlet ports 80, a liquid flow through the cartridge 2 is provided, if a liquid driving force is applied to at least a part of the input liquid 105. The input liquid 105 may comprise a carrier liquid 60 and/or a processing liquid 61.

A particular suitable carrier liquid 60 is an electrowetting filler liquid, for example a silicone oil. In an embodiment, an additional carrier liquid, for example a silicone oil may be used. An electrowetting filler liquid may be used for filling the gap 6, while a carrier liquid may be used to a liquid which segments droplets in the droplet generator. In one embodiment, the electrowetting filler liquid and the carrier liquid may be the same liquid. In a further embodiment, the electrowetting filler liquid is a different liquid, for example a different oil than the liquid used as a carrier liquid.

A processing liquid 61 can be any kind of liquid or liquid composition which is used for example in assay reactions or for analysis purposes or other applications carried out in the cartridge 2. Such a processing liquid 61 may be for example buffers, reaction liquids which comprise reactants required for a defined application, sample liquids which comprise a sample to be analyzed, diluent liquids, elution liquids, etc. Samples are for example DNA (Desoxyribonucleic acid), RNA (Ribonucleic Acid), derivatives thereof, proteins, cells, or other biologically or biochemically derived molecules or combinations thereof. The processing liquid 61 may in an embodiment comprise magnetic beads, to which for example one or more samples are bound.

Applications which may be carried out using a cartridge 2 and an electrowetting sample processing system 1 are for example at least one of chemical reactions, washing processes, heating processes, polymerase chain reaction (PCR) processes, hybridization processes, mixing processes, dilution processes, and NGS (next-generation sequencing) library prep assays.

The liquid flow through the cartridge 2 is realized by removing an amount of liquid as an output liquid 102 from the cartridge 2 via the outlet port 80 which is equivalent to the amount of input liquid 105 introduced into the cartridge 2. This operational linkage allows for example to maintain the level of liquid in the cartridge 2. Additionally, droplets of a determined volume may be generated outside the gap 6 of the cartridge 2, which allows a more precise volume control. This further allows storage of input liquids outside the cartridge 2, which removes requirements on the design of the gap 6 and the electrode array concerning for example the temperature of delicate liquids or volume requirements for bulk amounts of liquid. By removing such requirements from the cartridge 2, the design of the cartridge is more flexible, which allows the integration of more and/or more complex applications within one cartridge 2. The output liquid 102 may comprise at least a part of carrier liquid 60, processing liquid 61, sample containing liquid or any combinations thereof. The output liquid 102 may be treated as a waste liquid, which is discarded, or may be used for further processing.

Preferably, the delivery of the input liquid 105 through a liquid inlet port 19' into the gap 6 for an electrowetting induced movement is synchronized with the electrowetting control, to ensure a proper hand-off of droplets 23. However, other processes outside the cartridge 2 required beforehand of the delivery may be carried out independently from the operations of electrodes 10 used for electrowetting. Though some processes may be synchronized, others may be carried out asynchronously from the operation of the electrodes 10, as described in the following.

Possible liquid operations in connection with the liquid inlet port 19' and the outlet port(s) 80 are shown exemplarily in Figure 7: the cartridge 2 comprises one liquid inlet port 19' and three outlet ports 80 for liquids. Via the liquid inlet port 19', input liquid 105 may be introduced into the internal gap 6 of the cartridge 2. The input liquid 105 is provided from respective storage tubes 98. A multi-port valve 90 is in this case operably connected to the storage tubes 98, and additionally to the liquid inlet port 19', directly or via further elements such as a T-shaped junction. The connection is realized here by a tube 87 or a tube system comprising multiple tubes 87 that are in fluid connection to each other, so that the input liquid 105 is fed into the inlet port 19' from the storage place into the cartridge 2. Preferably, the tube 87 is a flexible tube.

The liquid feeder 86 comprises a multi-port valve 90 which allows for the movement of liquids 60,61 within the tubes 87 for introducing into the internal gap 6 of the cartridge 2, wherein in particular, the liquid feeder 86 comprises a liquid selector valve, for example a multiport valve, that works with an input syringe pump 99 for providing the liquid movement within the tubes. Because the inlet port 19' and the outlet ports 80 are connected operationally, liquid may additionally be removed from the gap 6 of the cartridge 2 by means of a further pump or the waste pump 103. Liquid 60,61 which has been removed from the cartridge 2 via the outlet port 80 is transported via tubes 87 for example to a waste collecting place. Tubes 87 which are involved in the removal of waste liquids are shown in light grey, the direction of liquid movement within the tubes 87 is indicated by dashed arrows.

The movement of liquids within the tubes 87 may be supported by providing one or more additional pumps 99,103 operably connected to the tube(s) 87, e.g. via a bypass 97. In the embodiment of the electrowetting sample processing system 1 shown in Figure 6, the removal of waste liquids is supported by the right one of the syringe pumps, which acts as an outlet syringe pump 103 whereas the left input syringe pump 99 particularly supports the movement of the input liquid 105. Waste liquids may then be collected in distinct waste collection containers, for example.

Waste management may further be supported by providing a removal line 91 within the cartridge 2. Such a removal line 91 is typically formed by a specific array of electrodes which guide input liquid 60,61 immediately from the inlet port 19' to an outlet port 80. This allows the immediate removal for example of wash fluid from the inlet port 19'. As shown in Figure 6, a removal zone 96, for example adjacent to the outlet port 80, may additionally be provided for collecting waste droplets prior their removal from the cartridge 2.

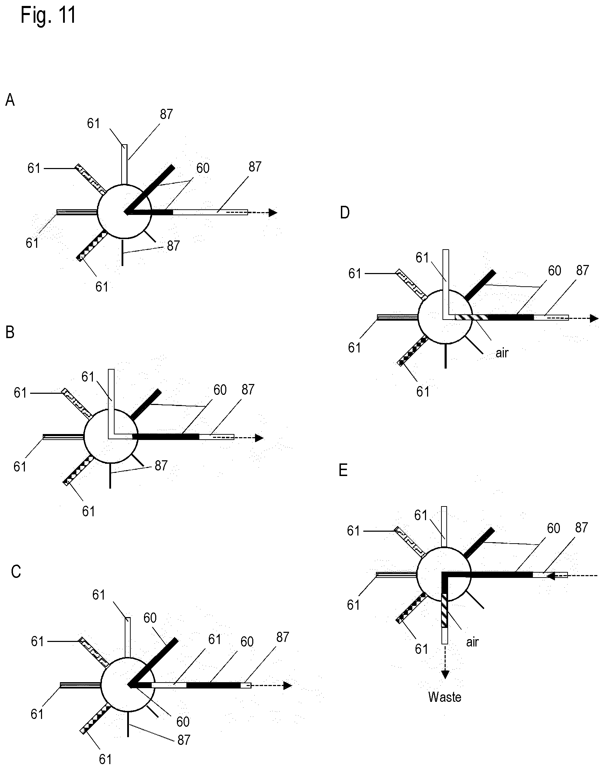

The liquid feeder 86 of the embodiment of the electrowetting sample processing system 1 shown in Figure 7 further comprises a T-shaped junction 88 for providing a predetermined volume of input liquid 60,61 to the liquid inlet port 19'. Alternatively or in addition, the liquid feeder 86 may comprises a multi-port valve 89 as shown for example in Figures 7 and 11.

At the T-shaped junction 88 the cross-flow is used for generating droplets of a defined volume. In particular, an carrier liquid 60 is pumped towards the T-shaped junction 88 by the left syringe pump 99 in alternating coordination with a processing liquid 61 from the direction of the liquid feeder 86, which is pumped into the T-shaped junction 88 in a cross-flow direction. By alternating flows of processing liquid 61 and carrier liquid 60, droplets of processing liquid 61 of controlled volume, separated by the carrier liquid 60, are generated.

Two different processing liquids 61 of a defined volume are generated by the T-shaped junction 88, indicated by white and black droplets, and are transported towards the liquid inlet port 19'. The distinct volumes of processing liquid 61 are separated by specific volumes of carrier liquid 60, so that the processing liquids 61 may be fed to the inlet port 19' alternatingly with the carrier liquid 60. Depending on the flow of the carrier liquid 60 towards the T-shaped junction 88 and the feeding of different processing liquids 61 into the tube towards that junction 88, it is also possible to provide the input liquid 105 as a sequential feed of a single type of processing liquid 61 or a sequential feed of two or more processing liquids 61, which differ in their composition.

The liquid feeder 86 comprises a multi-port valve 90 and four separate storage tubes 98, which are in fluid connection with the multi-port valve 90, wherein in each storage tube 98 stores a different processing liquid 61. In another example, up to 8, in particular up to 20, separate storage tubes 98 with different processing liquids are in fluid connection with the multi-port valve 90. Preferably, at least one storage tube 98 is provided and connected to the multi-port valve 90, however, multiple storage tubes 98 are preferred to provide sufficient storage space for different processing liquids 61.

In addition to the processing liquid 61, the carrier liquid 60 may be in fluid connection to the liquid feeder as well, as indicated for the supply tube 87 on the rightmost side of the multi-port valve 90.

In the present embodiment, the carrier liquid 60 comprises the same material composition as the electrowetting filler liquid, namely a silicon oil. In another example, the carrier liquid 60 and the electrowetting filler liquid 60 may be different, e.g. silicon oil with different viscosities.

The liquid feeder 86 additionally comprises a bypass 97 for removing access liquid from liquids which are to be provided as input liquid 105. Other liquids such as liquids for flushing one or more tubes 87 of the liquid feeder 86 may also be removed from the tubular connection with the inlet port 19' by using the bypass 87.

In this example, the cartridge 2 further comprises an air ventilation outlet 85 for providing a fluid output that is arranged separate from the outlet port. Here, the air ventilation outlet 85 serves as gas exhaust, in another example, the pressure cartridge comprises a compensation outlet such as a liquid overflow.

In this embodiment, the electrowetting sample processing system 1 comprises a reagent detector 104 for indicating the presence of reagent liquid in the input liquid, for example by detecting at least one characteristic of the reagent liquid, in particular an optical characteristic such as transmissivity (resp. absorbance) or refraction index or an electrical characteristic such as resistance (resp. conductivity) or capacity.

Figure 8 shows a schematic overview over another exemplary embodiment of an electrowetting sample processing system 1. The overall elements correspond to the elements as described in Figure 7. The embodiment of Figure 8 uses as a mechanism for storing and providing processing liquids a reagent carousel 100 in combination with one or more pipettes 101 for aspirating liquids from the storage place in the reagent carousel 100. The reagent carousel 100 preferably comprises a rotation mechanism for positioning a desired storage place in relation to the aspiration pipette 101. The aspiration pipette 101 is connected to the tube 87 for feeding the liquid inlet port 19' and may be configured to work automatically. For automatic aspiration of processing liquid 61, the pipette 101 may be configured to be movable at least along a Z-axis of a Cartesian coordinate system.

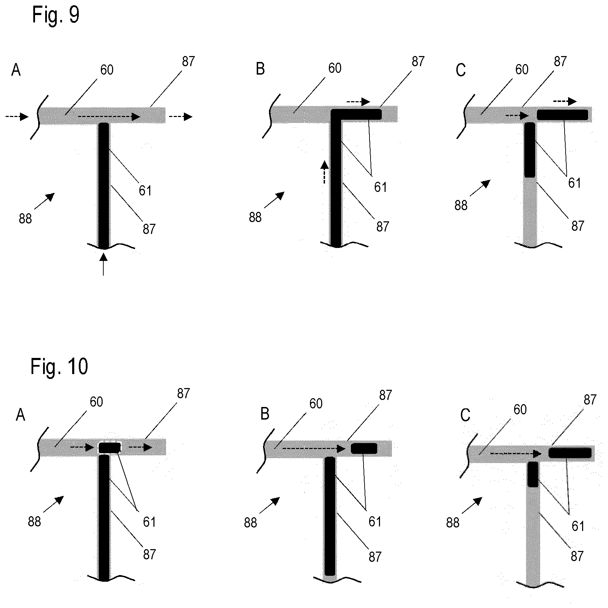

Figure 9 shows exemplarily in a schematic view how at a T-shaped junction 88 a droplet of a processing liquid 61 is formed from a bulk droplet of that liquid, followed by a volume of carrier liquid 60. Flow directions of liquid 60,61 within the tube 87 are indicated by dashed arrows. A bulk droplet of a processing liquid 61 is moved for example by the input syringe pump 99 and the multi-port valve 90 of the liquid feeder 86 forwards into the T-shaped junction 88, while the flow of the carrier liquid 61 is stopped (see situation in A and B). When the flow of the carrier liquid 60 is started, this flow shears of an initial droplet of processing liquid 61 from the leading volume of the bulk droplet where the two fluid paths cross each other. A fluid path cross point as present in the T-shaped junction 88 serves as a shear location (see situation C). The generated droplet may be pumped within the tube 87 towards the liquid inlet port 19', or into an alternative tube 87, for example into the bypass 97. By repeating the alternating flow of processing liquid 61 and carrier liquid 60 into the T-shaped junction 88, a train of droplets of processing liquid 61 and intermediate liquid parts of carrier liquid 60 is generated, which may be fed to the liquid inlet port 19' of the cartridge.

Figure 10 shows a schematic view of T-shaped junctions 88 where droplets 23 of uniform volumes are generated. For this, each droplet is sheared at both ends by using an alternating flow of two different liquids 60,61 at the T-shaped junction 88. The initial droplet which is generated from a bulk droplet at the shear location is sacrificed, so that the uncertainty of the position of the leading edge of the bulk droplet, which causes an uncertainty of the exact volume of the initial droplet generated, is removed. Again, the flow directions of liquid 60,61 within the tube 87 are indicated by dashed arrows.

As shown in situation A, a bulk droplet of processing liquid 61 is pumped into the T-shaped junction 88, and an initial volume of liquid 61 crosses the shear location. By starting the flow of the carrier liquid 60 towards the shear point in the T-shaped junction 88, an initial droplet of processing liquid 61 is sheared of the bulk droplet at the shear point. The initial droplet of processing liquid 61 is discarded and may be pumped, for example by means of separate pump like a syringe pump 99, into a waste path for removal. The new leading edge of the bulk droplet of processing liquid 61 is now at a defined position within the T-shaped junction 88 (situation B), so that the following droplets may be generated under controlled conditions. The residual bulk droplet (situation C) is discarded as well to ensure that the last droplet is created by shearing on both ends.

Figure 11 shows different views of a multi-port valve 89 which is configured for droplet generation independently from electrowetting processes in the cartridge 2. To the multi-port valve 89, a number tubes 87 are connected for providing the carrier liquid 60 and/or different processing liquids 61 into the valve. A dashed arrow indicates in each situation A to E the direction of liquid flow in the tube 87 after droplet generation. Liquid flow may be controlled by a suction action of a syringe pump 99, for example, by the application of pressure using a syringe pump 99, or by other means for controlling the flow of liquids in a tubular system. For generating a droplet 23 of a processing liquid 61, which is embedded within a carrier liquid 60, the supply tubes 87 for the liquids are filled, and the carrier liquid 60, for example a silicone oil, is guided into the valve (situation A). Upon switching the valve 89 from oil to a processing liquid 61 (situation B), followed by switching back to the oil supply tube 87 (situation C), an alternating flow of carrier fluid 60 and processing fluid 61 is formed.

An example of moving liquid towards a waste removal processing is shown for the situations D and E. This process may be used when for example an air gap is located within the processing liquid 61 and the carrier liquid 60. Using a syringe pump, reagents are pumped into the valve 89 with the air gap between the silicone oil and the processing liquid (situation D). Then, the valve is switched to a tube 87 which is connected with the waste removal system, and the air is pumped to the waste removal processing place.

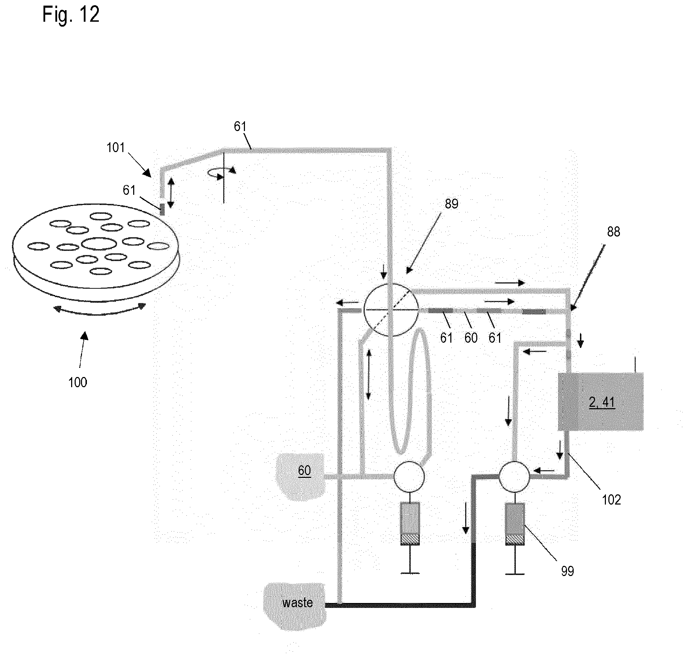

Figure 12 shows a schematic view of an exemplary electrowetting sample processing system 1 comprising a multi-port valve 89 and a T-shaped junction 88 for droplet generation and another embodiment of tube arrangement and combination of elements for guiding liquids 60,61 into and from the cartridge 2. General details may be taken from the Figures 7 and 8.

**REFERENCE SIGNS LIST**

| | | | |
|---|---|---|---|
| 1 | electrowetting sample processing system digital microfluidics system | 15 | electrically conductive material |
| | | 16 | hinge |
| 2 | cartridge | 17 | hydrophobic surface |
| 3 | bottom layer | 18 | piercing facility |
| 3' | membrane | 19 | through hole |
| 3'' | hydrophobic layer | 19' | inlet port |
| | | 19" | channel |
| 4 | top layer | 20 | piercing pipette tip |
| 5 | spacer | 21 | compartment |
| 6 | gap between 3 and 4 | 22 | additional piercing facility |
| 7 | base unit | | |
| 8 | cartridge accommodation site | 23 | liquid droplet |
| 9,9' | electrode array | 24 | dielectric layer |
| 10 | individual electrode | 26 | disposable pipette tip |
| | | 27 | piercing pin |
| 11 | bottom substrate | | |
| 11' | support element | 40 | board accommodation site |
| 12 | cover plate | 41 | electrode board |
| 13 | top substrate | 50 | supply channel |
| 14 | central control unit | 60 | carrier liquid |
| 14' | electrical connector | 61 | processing liquid |
| | | 80 | outlet port |
| 81 | seal | 94 | centering cone of first connection sleeve |
| 82 | peripheral side structure | | |
| 83 | first connecting sleeve | 95 | centering cone of second connection sleeve |
| 84 | second connecting sleeve | | |
| 85 | air ventilation outlet | 96 | removal zone |
| 86 | liquid feeder | 97 | bypass |
| 87 | tube | 98 | storage tube |
| 88 | T-shaped junction | 99 | input syringe pump |
| | | 100 | reagent carousel |
| 89 | multi-port valve | 101 | pipette |
| 90 | multi-port valve, pump | 102 | output liquid |
| 91 | removal line | 103 | output syringe pump |
| 92 | vacuum supply line | | |
| 93 | removal line | 104 | reagent detector |
| | | 105 | input liquid |

## Claims

1. A cartridge (2) for use in an electrowetting sample processing system, the cartridge comprising one or more inlet ports (19') for introducing an input liquid (105) into an internal gap (6) of the cartridge (2), which comprises at least one hydrophobic surface (17) for enabling an electrowetting induced movement of multiple microfluidic droplets (23) separated from the input liquid (105),
wherein the cartridge (2) further comprises at least one outlet port (80) for removing liquid from the internal gap (6), wherein the at least one outlet port (80) is operably connected to the inlet port (19') for providing a continuous liquid flow through the internal gap (6), if a liquid driving force is applied to at least a part of the input liquid,
**characterized in that** the cartridge (2) comprises a first part (4) with the inlet port (19') and a second part (3) attached to the first part (4), such that the gap (6) is formed between the first part (4) and the second part (3), the second part (3) comprising an electrode support element (11') or a flexible film (3').

2. The cartridge (2) according to claim 1, wherein the first part (4) comprises a rigid body and/or the second part (3) comprises or is a polymer film, and wherein in particular the second part (4) is attached to a peripheral side structure (82) of the first part

3. The cartridge (2) according to claim 1 or 2, wherein the gap (6) is defined by a spacer (5) that is arranged between the first part (4) and the second part (3,3') or by the shape of at least one of the two parts of the cartridge (2), in particular by a flexible part or a rigid part of the cartridge (2).

4. The cartridge (2) according to anyone of the preceding claims, configured to substantially maintain a volume equilibrium in the cartridge (2).

5. The cartridge (2) according to anyone of the preceding claims comprising a plurality of electrodes, in particular an electrode array (9), for applying an electrowetting force to the microfluidic droplets (23), wherein in particular at least two of the electrodes (10) are connected to an electrical interface (14'), in particular to an electrical connector or contact field.

6. The cartridge (2) according to anyone of the preceding claims, configured as a disposable cartridge and/or as cartridge that is removably attachable to an electrowetting sample processing system (1).

7. An electrowetting sample processing system (1) comprising a cartridge (2) according to anyone of the preceding claims.

8. The electrowetting sample processing system (1) according to claim 7, comprising a plurality of electrodes (10) for applying an electrowetting force to the microfluidic droplets (23), in particular an electrode array (9;10), further in particular a two-dimensional electrode array.

9. The electrowetting sample processing system (1) according to anyone of claims 7 to 8, comprising a liquid feeder (86) with a control element, the liquid feeder (86) being operably connected to the inlet port (19') by a tube (87) for feeding the input liquid (105) to the inlet port (19'), wherein in particular to the liquid feeder (86) at least one of the following applies:
- is configured to provide the input liquid (105) as sequential feed and/or alternating feed of a processing liquid (61) and a carrier liquid (60)
- is configured to provide the input liquid (105) as feed of at least two processing liquids (61) of different compositions separated by a carrier liquid (60), and
- comprises a T-shaped junction (88) and/or a multi-port valve (89) for providing the input liquid.

10. The electrowetting sample processing system (1) according to claim 9, wherein to the liquid feeder (86) at least one of the following applies:
- comprises a bypass (97) that is controllable for flushing a tube of the feeder (86) and/or for removing an access liquid from a feeding liquid and to providing the remaining part of the feeding liquid as the input liquid (105),
- comprises a control element, in particular a pump (99,103) or a multi-port valve (90), for introducing the input liquid (105) into the internal gap (6) and/or for removing an output liquid (102) from the internal gap (6), and
- is configured to operate independently and/or asynchronously from the operation of electrodes (10) used for electrowetting.

11. The electrowetting sample processing system (1) according to anyone of the claims 7 to 10, comprising a reagent detector (104) for indicating the presence of processing liquid in the input liquid (105) and/or for monitoring the amount of processing liquid in the input liquid (105), in particular in relation to a predetermined value.

12. A method for operating a cartridge (2) that comprises a first part (4) with the inlet port (19') and a second part (3) attached to the first part (4), such that a gap (6) is formed between the first part (4) and the second part (3) and the second part (3) comprises an electrode support element (11') or a flexible film (3'), wherein the internal gap (6) comprises one or more inlet ports (19'), an outlet port (80) for removing liquid from the internal gap (6) of the cartridge (2) and at least one hydrophobic surface (17) for enabling an electrowetting induced movement of microfluidic droplets (23) separated from the input liquid, the method comprising:
- introducing an input liquid (105) into an internal gap (6);
- providing a flow through the internal gap (6) as a substantially continuous flow;
- transferring the liquid from the inlet port (19') to the outlet port (80) via the internal gap (6) by applying a liquid driving force, in particular an electrowetting force or a pressure force, to at least a part of the input liquid (105); and
- removing the liquid from the internal gap (6) via the outlet port (80).

13. The method according to the claim 12, wherein the driving force is provided by a plurality of electrodes (10), in particular by an electrode array (9;10), further in particular by a two-dimensional electrode array.

14. The method according to claim 12 or 13, wherein the method comprises:
- the step of providing the flow through the internal gap (6) by maintaining a volume equilibrium, and/or
- inducing a movement of multiple microfluidic droplets by operating a plurality of electrodes for applying the electrowetting force to the microfluidic droplets.

15. The method according to anyone of the claims 12 to 14, wherein the input liquid (105) comprises a carrier liquid (60) and/or an electrowetting filler liquid, in particular a silicone oil and/or a processing liquid (61) that comprises at least one of:
- a reagent,
- a buffer,
- a diluent,
- an extraction liquid,
- a washing liquid, and
- a suspension, which further in particular is a suspension of magnetic beads, single cells or cell aggregates.

## Patentansprüche

1. Kartusche (2) zur Verwendung in einem
Elektrobenetzungs-Probenverarbeitungssystem, wobei die Kartusche eine oder mehrere Einlassöffnungen (19') zum Einführen einer Eingabeflüssigkeit (105) in einen inneren Spalt (6) der Kartusche (2) umfasst, die mindestens eine hydrophobe Oberfläche (17) umfasst, um eine durch Elektrobenetzung induzierte Bewegung mehrerer mikrofluidischer Tröpfchen (23) zu ermöglichen, die von der Eingabeflüssigkeit (105) abgetrennt sind,
wobei die Kartusche (2) weiterhin mindestens eine Auslassöffnung (80) zum Entnehmen von Flüssigkeit aus dem inneren Spalt (6) umfasst, wobei die mindestens eine Auslassöffnung (80) mit der Einlassöffnung (19') wirkverbunden ist, um einen kontinuierlichen Flüssigkeitsstrom durch den inneren Spalt (6) bereitzustellen, wenn eine Flüssigkeitsantriebskraft auf mindestens einen Teil der zugeführten Flüssigkeit ausgeübt wird,
**dadurch gekennzeichnet, dass** die Kartusche (2) einen ersten Teil (4) mit der Einlassöffnung (19') und einen zweiten Teil (3) umfasst, der an dem ersten Teil (4) befestigt ist, so dass der Spalt (6) zwischen dem ersten Teil (4) und dem zweiten Teil (3) gebildet wird, wobei der zweite Teil (3) ein Elektrodenträgerelement (11') oder einen flexiblen Film (3') umfasst.

2. Die Kartusche (2) nach Anspruch 1, wobei der erste Teil (4) einen starren Körper umfasst und/oder der zweite Teil (3) ein Polymerfilm umfasst oder ist, und wobei insbesondere der zweite Teil (4) an einer peripheren Seitenstruktur (82) des ersten Teils befestigt ist.

3. Die Kartusche (2) nach Anspruch 1 oder 2, wobei der Spalt (6) durch einen zwischen dem ersten Teil (4) und dem zweiten Teil (3,3') angeordneten Abstandshalter (5) definiert ist, oder durch die Form zumindest eines der beiden Teile der Kartusche (2), insbesondere durch einen flexiblen Teil oder einen starren Teil der Kartusche (2).

4. Die Kartusche (2) nach einem der vorhergehenden Ansprüche, die so konfiguriert ist, dass sie im Wesentlichen ein Volumengleichgewicht in der Kartusche (2) aufrechterhält.

5. Die Kartusche (2) nach einem der vorhergehenden Ansprüche mehrere Elektroden umfassend, insbesondere ein Elektrodenarray (9), zum Aufbringen einer Elektrobenetzungskraft auf die mikrofluidischen Tröpfchen (23), wobei insbesondere mindestens zwei der Elektroden (10) mit einer elektrischen Schnittstelle (14'), insbesondere mit einem elektrischen Anschluss oder Kontaktfeld, verbunden sind.

6. Die Kartusche (2) nach einem der vorhergehenden Ansprüche, konfiguriert als Wegwerfkartusche und/oder als Kartusche, die abnehmbar an einem Elektrobenetzungs-Probenverarbeitungssystem (1) befestigbar ist.

7. Ein Elektrobenetzungs-Probenverarbeitungssystem (1), das eine Kartusche (2) nach einem der vorhergehenden Ansprüche umfasst.

8. Das Elektrobenetzungs-Probenverarbeitungssystem (1) nach Anspruch 7, umfassend eine Vielzahl von Elektroden (10) zum Aufbringen einer Elektrobenetzungskraft auf die mikrofluidischen Tröpfchen (23), insbesondere ein Elektrodenarray (9; 10), weiter insbesondere ein zweidimensionales Elektrodenarray.

9. Das Elektrobenetzungs-Probenverarbeitungssystem (1) nach einem der Ansprüche 7 bis 8, umfassend eine Flüssigkeitszuführung (86) mit einem Kontrollelement, wobei die Flüssigkeitszuführung (86) durch einen Schlauch (87) mit der Einlassöffnung (19') wirkverbunden ist, um die Eingangsflüssigkeit (105) der Einlassöffnung (19') zuzuführen, wobei insbesondere mindestens eines der Folgenden für die Flüssigkeitszuführung (86) gilt:
- konfiguriert ist, die Eingabeflüssigkeit (105) als sequentielle Zufuhr und/oder abwechselnde Zufuhr einer Prozessflüssigkeit (61) und einer Trägerflüssigkeit (60) bereitzustellen
- konfiguriert ist, um die Eingangsflüssigkeit (105) als Zufuhr von mindestens zwei Prozessflüssigkeiten (61) unterschiedlicher Zusammensetzung bereitzustellen, die durch eine Trägerflüssigkeit (60) getrennt sind, und
- umfasst eine T-förmige Verbindung (88) und/oder ein Mehrwegeventil (89) zur Bereitstellung der Eingangsflüssigkeit.

10. Das Elektrobenetzungs-Probenverarbeitungssystem (1) nach Anspruch 9, wobei für die Flüssigkeitszuführung (86) mindestens eines der Folgenden gilt:
- umfasst einen Bypass (97), der kontrollierbar ist, um einen Schlauch der Zuführung (86) zu spülen und/oder um eine Zugangsflüssigkeit aus einer Zuführflüssigkeit zu entfernen und um den verbleibenden Teil der Zuführflüssigkeit als Eingangsflüssigkeit (105) bereitzustellen,
- umfasst ein Kontrollelement, insbesondere eine Pumpe (99,103) oder ein Mehrwegeventil (90), zum Einbringen der Eingangsflüssigkeit (105) in den inneren Spalt (6) und/oder zum Entnehmen einer Ausgangsflüssigkeit (102) aus dem inneren Spalt (6), und
- ist konfiguriert, um unabhängig und/oder asynchron vom Betrieb der für die Elektrobenetzung verwendeten Elektroden (10) zu arbeiten.

11. Das Elektrobenetzungs-Probenverarbeitungssystem (1) nach einem der Ansprüche 7 bis 10, umfassend einen Reagenzdetektor (104) zum Anzeigen des Vorhandenseins von Verarbeitungsflüssigkeit in der Eingabeflüssigkeit (105) und/oder zum Überwachen der Menge an Prozessflüssigkeit in der Eingabeflüssigkeit (105), insbesondere in Bezug auf einen vorbestimmten Wert.

12. Verfahren zum Betreiben einer Kartusche (2), die einen ersten Teil (4) mit der Einlassöffnung (19') und einen zweiten Teil (3) umfasst, der an dem ersten Teil (4) befestigt ist, so dass zwischen dem ersten Teil (4) und dem zweiten Teil (3) ein Spalt (6) gebildet wird und der zweite Teil (3) ein Elektrodenträgerelement (11') oder einen flexiblen Film (3') umfasst, wobei der innere Spalt (6) eine oder mehrere Einlassöffnungen (19'), eine Auslassöffnung (80) zum Entnehmen von Flüssigkeit aus dem inneren Spalt (6) der Kartusche (2) und mindestens eine hydrophobe Oberfläche (17) umfasst, um eine durch Elektrobenetzung induzierte Bewegung mikrofluidischer Tröpfchen (23) zu ermöglichen, welche abgetrennt von der zugeführten Flüssigkeit sind, wobei das Verfahren umfasst:
- Einleiten einer Eingangsflüssigkeit (105) in einen inneren Spalt (6);
- Bereitstellen einer Strömung durch den inneren Spalt (6) als eine im Wesentlichen kontinuierliche Strömung;
- Transferieren der Flüssigkeit von der Einlassöffnung (19') zur Auslassöffnung (80) über den inneren Spalt (6) durch Aufbringen einer Flüssigkeitsantriebskraft, insbesondere einer Elektrobenetzungskraft oder einer Druckkraft, auf zumindest einen Teil der Eingangsflüssigkeit (105); und
- Entfernen der Flüssigkeit aus dem inneren Spalt (6) über die Auslassöffnung (80).

13. Verfahren nach Anspruch 12, worin die Antriebskraft durch mehrere Elektroden (10), insbesondere durch ein Elektrodenarray (9; 10), weiter insbesondere durch ein zweidimensionales Elektrodenarray, bereitgestellt wird.

14. Verfahren nach Anspruch 12 oder 13, worin das Verfahren umfasst:
- den Schritt des Bereitstellens der Strömung durch den inneren Spalt (6) unter Aufrechterhaltung eines Volumengleichgewichts, und/oder
- Induzieren einer Bewegung mehrerer mikrofluidischer Tröpfchen durch Verwendung einer Mehrzahl von Elektroden zum Anwenden der Elektrobenetzungskraft auf die mikrofluidischen Tröpfchen.

15. Verfahren nach einem der Ansprüche 12 bis 14, worin die Eingabeflüssigkeit (105) eine Trägerflüssigkeit (60) und/oder eine Elektrobenetzungs-Füllflüssigkeit umfasst, insbesondere ein Silikonöl und/oder eine Prozessflüssigkeit (61), die mindestens eines von Folgendem umfasst:
- ein Reagenz,
- einen Puffer,
- ein Verdünnungsmittel,
- eine Extraktionsflüssigkeit,
- eine Waschflüssigkeit und
- eine Suspension, bei der es sich weiter insbesondere um eine Suspension aus magnetischen Beads, Einzelzellen oder Zellaggregaten handelt.

## Revendications

1. Cartouche (2) à utiliser dans un système de traitement d'échantillon par électromouillage, la cartouche comprenant un ou plusieurs orifices d'admission (19') destinés à introduire un liquide d'admission (105) dans un espace interne (6) de la cartouche (2), qui comprend au moins une surface hydrophobe (17) qui permet un mouvement induit par électromouillage de multiples gouttelettes microfluidiques (23) séparées du liquide d'admission (105),
dans laquelle la cartouche (2) comprend en outre au moins un orifice de sortie (80) destiné à retirer le liquide de l'espace interne (6), dans laquelle l'orifice de sortie (80), au moins au nombre de un, est fonctionnellement relié à l'orifice d'admission (19') afin de fournir un écoulement continu de liquide via l'espace interne (6) si une force d'entraînement de liquide est appliquée sur au moins une partie du liquide d'admission,
**caractérisée en ce que** la cartouche (2) comprend une première partie (4) comportant l'orifice d'admission (19') et une seconde partie (3) reliée à la première partie (4) de façon telle que l'espace (6) est formé entre la première partie (4) et la seconde partie (3), la seconde partie (3) comprenant un élément de soutien d'électrode (11') ou un film flexible (3').

2. Cartouche (2) selon la revendication 1, dans laquelle la première partie (4) comprend un corps rigide et/ou la seconde partie (3) comprend ou est un film polymère, et dans laquelle en particulier la seconde partie (4) est attachée à une structure latérale périphérique (82) de la première partie.

3. Cartouche (2) selon la revendication 1 ou 2, dans laquelle l'espace (6) est défini par une entretoise (5) qui est agencée entre la première partie (4) et la seconde partie (3, 3'), ou par la forme d'au moins l'une des deux parties de la cartouche (2), en particulier par une partie flexible ou une partie rigide de la cartouche (2).

4. Cartouche (2) selon l'une quelconque des revendications précédentes, configurée pour maintenir essentiellement un équilibre de volume dans la cartouche (2).

5. Cartouche (2) selon l'une quelconque des revendications précédentes, comprenant une pluralité d'électrodes, en particulier un réseau d'électrodes (9), permettant d'appliquer une force d'électromouillage aux gouttelettes microfluidiques (23), dans laquelle en particulier au moins deux des électrodes (10) sont connectées à une interface électrique (14'), en particulier à un connecteur électrique ou une zone de contacts.

6. Cartouche (2) selon l'une quelconque des revendications précédentes, configurée en tant que cartouche jetable et/ou en tant que cartouche qui peut être fixée de façon amovible à un système de traitement d'échantillons par électromouillage (1).

7. Système de traitement d'échantillons par électromouillage (1) comprenant une cartouche (2) selon l'une quelconque des revendications précédentes.

8. Système de traitement d'échantillons par électromouillage (1) selon la revendication 7, comprenant une pluralité d'électrodes (10) permettant d'appliquer une force d'électromouillage aux gouttelettes microfluidiques (23), en particulier au moins un réseau d'électrodes (9 ; 10), et de façon encore plus particulière un réseau d'électrodes à deux dimensions.

9. Système de traitement d'échantillons par électromouillage (1) selon l'une quelconque des revendications 7 à 8, comprenant un dispositif d'amenée de liquide (86) comportant un élément de commande, le dispositif d'amenée de liquide (86) étant fonctionnellement connecté à l'orifice d'admission (19') via un tube (87) d'alimentation en liquide d'admission (105) vers l'orifice d'admission (19'), dans lequel en particulier s'applique pour le dispositif d'amenée de liquide (86) au moins l'une des caractéristiques suivantes :
- il est configuré pour fournir du liquide d'admission (105) sous forme d'un apport séquentiel et/ou d'un apport en alternance d'un liquide de traitement (61) et d'un liquide porteur (60),
- il est configuré pour fournir le liquide d'admission (105) sous la forme d'un apport d'au moins deux liquides de traitement (61) de compositions différentes séparées par un liquide porteur (60), et
- il comprend une jonction en T (88) et/ou une vanne multivoies (89) permettant d'amener le liquide d'admission.

10. Système de traitement d'échantillons par électromouillage (1) selon la revendication 9, dans lequel s'applique, pour le dispositif d'amenée de liquide (86), au moins l'une des caractéristiques suivantes :
- il comprend une dérivation (97) qui peut être commandée pour rincer un tube du dispositif d'amenée (86) et/ou pour retirer un liquide d'accès d'un liquide d'amenée et fournir la partie restante du liquide d'amenée en tant que liquide d'admission (105),
- il comprend un élément de commande, en particulier une pompe (99, 103) ou une vanne multivoies (90), permettant d'introduire le liquide d'admission (105) dans l'espace interne (6) et/ou de retirer un liquide de sortie (102) de l'espace interne (6), et
- il est configuré pour fonctionner indépendamment et/ou de façon asynchrone par rapport au fonctionnement des électrodes (10) utilisées pour l'électromouillage.

11. Système de traitement d'échantillons par électromouillage (1) selon l'une quelconque des revendications 7 à 10, comprenant un détecteur de réactif (104) permettant d'indiquer la présence de liquide de traitement dans le liquide d'admission (105) et/ou de surveiller la quantité de liquide de traitement dans le liquide d'admission (105), en particulier en relation avec une valeur prédéterminée.

12. Procédé pour faire fonctionner une cartouche (2) qui comprend une première partie (4) comportant l'orifice d'admission (19') et une seconde partie (3) attachée à la première partie (4) , de sorte qu'un espace (6) est formé entre la première partie (4) et la seconde partie (3), et la seconde partie (3) comprend un élément de support d'électrode (11') ou un film flexible (3'), dans lequel l'espace interne (6) comprend un ou plusieurs orifices d'admission (19'), un orifice de sortie (80) pour retirer du liquide de l'espace interne (6) de la cartouche (2), et au moins une surface hydrophobe (17) pour permettre un mouvement induit par électromouillage de gouttelettes microfluidiques (23) séparées du liquide d'admission, le procédé comprenant :
- l'introduction d'un liquide d'admission (105) dans un espace interne (6) ;
- la fourniture d'un écoulement par l'espace interne (6) en tant qu'écoulement essentiellement continu ;
- le transfert du liquide depuis l'orifice d'admission (19') vers l'orifice de sortie (80) via l'espace interne (6) en appliquant une force d'entraînement de liquide, en particulier une force d'électromouillage ou une force de pression, sur au moins une partie du liquide d'admission (105) ; et
- le retrait du liquide de l'espace interne (6) via l'orifice de sortie (80).

13. Procédé selon la revendication 12, dans lequel la force d'entraînement est fournie par une pluralité d'électrodes (10), en particulier par un réseau d'électrodes (9 ; 10), de façon plus particulière par un réseau d'électrodes à deux dimensions.

14. Procédé selon la revendication 12 ou 13, dans lequel le procédé comprend :
- l'étape consistant à fournir l'écoulement via l'espace interne (6) en maintenant un équilibre de volume, et/ou
- l'étape consistant à induire un mouvement de multiples gouttelettes microfluidiques en actionnant une pluralité d'électrodes pour appliquer la force d'électromouillage aux gouttelettes microfluidiques.

15. Procédé selon l'une quelconque des revendications 12 à 14, dans lequel le liquide d'admission (105) comprend un liquide porteur (60) et/ou un liquide de remplissage pour électromouillage, en particulier une huile de silicone et/ou un liquide de traitement (61) qui comprend au moins un des composants suivants :
- un réactif,
- un agent tampon,
- un diluant,
- un liquide d'extraction,
- un liquide de lavage, et
- une suspension, qui est en outre en particulier une suspension de perles magnétiques, de cellules individuelles ou d'agrégats de cellules.
